Europäisches Patentamt

European Patent Office

Office européen des brevets

(19)

(11) Veröffentlichungsnummer: **0 204 898**
**B1**

(12)                    EUROPÄISCHE PATENTSCHRIFT

(45) Veröffentlichungstag der Patentschrift:
16.08.89

(51) Int. Cl.⁴: **G 01 D  5/22, G 01 B  7/14**

(21) Anmeldenummer: 86103460.1

(22) Anmeldetag: 14.03.86

(54) Berührungsfreies Messverfahren und Messvorrichtung.

(30) Priorität: 19.04.85  DE 3514154

(43) Veröffentlichungstag der Anmeldung:
17.12.86 Patentblatt 86/51

(45) Bekanntmachung des Hinweises auf die Patenterteilung:
16.08.89 Patentblatt 89/33

(84) Benannte Vertragsstaaten:
DE FR GB IT

(56) Entgegenhaltungen:
DE-A- 2 635 288
DE-A- 3 242 109

(73) Patentinhaber: ROBERT BOSCH GMBH, Postfach 50,
D-7000 Stuttgart 1 (DE)

(72) Erfinder: Dobler, Klaus, Dr.-Ing., Bettäckerstrasse 12,
D-7016 Gerlingen (DE)
Erfinder: Hachtel, Hansjörg, Dipl.-Ing. (FH),
Buchenstrasse 4, D-7251 Weissach (DE)

## Beschreibung

### Stand der Technik

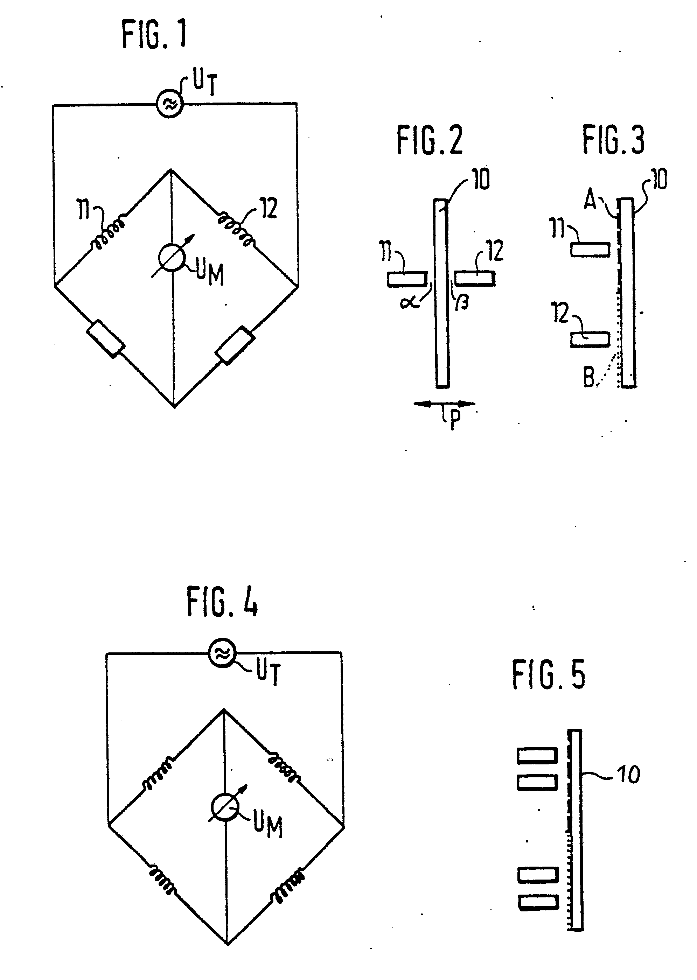

Die Erfindung geht aus von einer Meßvorrichtung nach der Gattung des Hauptanspruchs. Zum berührungsfreien Erfassen von Wegen werden in der Meßtechnik oftmals Induktiv- oder Wirbelstromsensoren eingesetzt, die nach dem Wheatstone'schen Brückenprinzip verschaltet sind. Dadurch erreicht man eine Verringerung des Einflusses von Störgrößen auf das Meßergebnis (Temperaturschwankungen, Magnetfeldeinflüsse usw.), vorausgesetzt mindestens zwei Spulen sind in benachbarten Zweigen angeordnet. Bei einer bekannten, aus zwei aktiven Sensoren bestehenden Meßvorrichtung müssen die beiden Spulen, um ein Meßsignal zu erhalten, auf verschiedenen Seiten des Meßglieds angebracht werden, um dadurch während des Meßvorgangs gegenläufig verlaufende Scheinwiderstandsänderungen zu erfahren. Eine derartige Anordnung ist in den Figuren 1 und 2 näher beschrieben.

Es ist weiterhin aus DE-A-3 242 109 eine Vorrichtung zur Erfassung der Drehzahl eines rotierenden Teils nach dem Induktiv- und Wirbelstrommeßverfahren bekanntgeworden, wobei eine von einem Wechselstrom bestimmter Frequenz durchflossene Spule in der Nähe eines Meßrades angeordnet ist und ein von der Drehzahl desselben abhängiges Meßsignal abgibt, das durch Änderung der Induktivität der Spule während des Meßvorganges bewirkt wird und von einer bei einer bestimmten Schwellspannung ansprechenden Auswerteschaltung ausgewertet wird. Dabei sind Markierungen vorgesehen, die innerhalb jeder Periode mindestens eine Zone aus ferromagnetischem Material und mindestens eine Zone aus nicht ferromagnetischem, jedoch elektrisch leitfähigem Material enthalten. Dabei wird als Schwellspannung für die Auswertung des Meßsignals diejenige Spannung verwendet, die an der Spule als Meßspannung auftritt. Dies ist dann der Fall, wenn das ferromagnetische Material oder die Frequenz des durch die Spule fließenden Wechselstroms so gewählt ist, daß in den aus dem ferromagnetischen Material bestehenden Zonen der magnetostatische Effekt größer ist als der Wirbelstromeffekt.

### Vorteile der Erfindung

Die erfindungsgemäße Meßvorrichtung mit den kennzeichnenden Merkmalen des Anspruchs 1 hat den Vorteil, daß es möglich ist, sogenannte Halbbrücken auch dann mit zwei aktiven Sensoren zu betreiben, wenn aus konstruktiven Gründen (z.B. Platzmangel) das Meßglied nur einseitig zugänglich ist. Dadurch erreicht man bei optimaler Parameterauslegung elektronischer Größen zueinander (insbesondere Trägerfrequenz, Spuleninduktivität bzw. der parallel zum Sensor anliegenden Kapazität) eine Erhöhung der Empfindlichkeit. Gleichzeitig werden einige Fehler vermindert, die durch Störgrößen verursacht werden. Dies gilt insbesondere für Fehler, die in den während der Messung auftretenden Änderungen der Eigenschaften der Meßbrücke sowie der Verbindungskabel Brücke-Meßverstärker begründet sind (im wesentlichen Widerstands- und Kapazitätsschwankungen), oder Fehler, die durch elektromagnetische Wechselfelder verursacht werden, die über die Sensorspule und Verbindungskabel auf das Meßsystem einwirken, oder weiterhin Fehler, die durch Amplitudenschwankungen der Trägerfrequenzen entstehen.

Durch die in den abhängigen Ansprüchen aufgeführten Maßnahmen sind vorteilhafte Weiterbildungen und Verbesserungen der im Anspruch 1 angegebenen Merkmale möglich.

### Zeichnung

In dieser ist zuerst ein Ausführungsbeispiel nach dem Stand der Technik in Figur 2 dargestellt, während zwei Ausführungsbeispiele der Erfindung in den Figuren 3 bis 5 erläutert sind.

### Beschreibung der Ausführungsbeispiele

Die Figur 1 zeigt ein Schaltschema, wie es bei einem berührungsfreien Meßverfahren nach dem Stand der Technik — siehe Figur 2 — und beim Anmeldungsgegenstand — insbesondere Figur 3 — verwendet ist. In Figur 2 ist mit 10 ein Meßglied dargestellt, z.B. eine Platte oder ein Stab. Eine Bewegung des Meßgliedes bewirkt immer eine gegensätzliche Veränderung der Spaltweiten $\alpha$ und $\beta$. Vergrößert sich $\alpha$, so verkleinert sich $\beta$, und umgekehrt. Die Figur 1 zeigt eine Meßbrücke (Halbbrücke), bestehend aus den zwei Spulen 11, 12 (Sensoren). Um das Meßsignal $U_M$ zu erhalten, müssen die beiden Spulen während des Meßvorgangs gegenläufig verlaufende Scheinwiderstandsänderungen erfahren. Wird der Meßbrücke eine Trägerspannung $U_T$, z.B. eine Wechselspannung bestimmter Frequenz $f_{TM}$ zugeführt, so entsteht durch die Bewegung des Meßglieds eine Meßspannung $U_M$, die durch die Änderung der Induktivität der Spulen 11, 12 bewirkt wird. Die Meßspannung bzw. das Meßsignal kann dann in irgendeiner Weise für einen Steuerungsvorgang benutzt werden.

Bei manchen Anwendungen ist eine solche Lösung aus konstruktiven Gründen nicht oder nur sehr schwierig zu verwirklichen, weil das Meßglied nur von einer Seite zugänglich ist. Das Ausführungsbeispiel nach Figur 3 gemäß der Erfindung zeigt eine Möglichkeit, bei der es mit Hilfe eines besonderen Verfahrens möglich ist, Halbbrücken auch dann mit zwei aktiven Spulen (Sensoren) zu betreiben, wenn aus konstruktiven Gründen das Meßglied 10 nur einseitig zugänglich ist. Hier sind die beiden Spulen also nur auf einer Seite des Meßglieds im Abstand zueinander in vorzugsweise genau derselben Ebene angeordnet.

Auf der einen Hälfte des Meßglieds 10 ist erfindungsgemäß eine Zone A gestrichelt eingezeichnet, die aus einem ferromagnetischen Werkstoff besteht, und eine punktierte Zone B, die aus elektrisch leitendem, nicht ferromagnetischem Werkstoff besteht. Es genügt, wenn diese Werkstoffe beispielsweise nur als Schicht aufgetragen sind. Es hat sich gezeigt, daß bei einer günstig gewählten Frequenz $f_{TM}$ der Trägerspannung $U_T$ die Spule 11 vorzugsweise nach dem induktiven, die Spule 12 nach dem Wirbelstromprinzip arbeitet. Dabei wird dann die oben erwähnte Meßspannung $U_M$ erhalten, wenn sich das Meßglied 10 den Spulen nähert oder sich von diesen entfernt.

Als ferromagnetische Werkstoffe kommen in Frage: Eisen, Eisensiliciumlegierungen, Eisennickellegierungen, amorphe Metalle. Als nicht ferromagnetische Werkstoffe kommen in Frage: antimagnetischer Stahl, Aluminium, Kupfer, Messing.

Beim Annähern des Meßglieds 10 an die Spulen 11, 12 erhöht sich an der Spule 11 deren Spulenscheinwiderstand, während sich derjenige an der Spule 12 verkleinert. Sinngemäß umgekehrt verhält es sich beim Vergrößern des Abstands. Man erhält also bei einer Brückenschaltung mit zwei aktiven, in benachbarten Zweigen angeordneten Spulen die erforderlichen gegensätzlichen Widerstandsänderungen, obgleich sich die Spaltweite gleichsinnig verändert.

Im folgenden ist dieser Effekt erklärt. Bei berührungsfreien elektrischen Induktiv- oder Wirbelstrommeßverfahren durchfließt ein von einem Generator erzeugter Wechselstrom mit der Trägerfrequenz $f_T$ eine Sensorspule. Da der dort auftretende Spannungsabfall $U_g$ zur Meßsignalgewinnung ausgenützt wird, bestimmt die Größe des Scheinwiderstandes einer Spule die Höhe der Meßspannung $U_M$. Dabei ergeben sich nachstehende Zusammenhänge:

Besteht das Meßglied 10 aus ferromagnetischem Material (z.B. St37.11), so bestimmen zwei Effekte die Induktivität der Spule. Der magnetostatische Effekt bewirkt bei Annäherung des Meßglieds 10 an die Spule eine Induktivitätserhöhung, der Wirbelstromeffekt dagegen eine Induktivitätsverminderung; die beiden Effekte wirken also gegensätzlich. Mit steigender Frequenz $f_T$ nimmt bekannterweise der Wirbelstromeffekt zu, während sich die Permeabilität verkleinert. Aus diesem Grund überwiegt beispielsweise bei ferromagnetischen Stählen (bei relativ niedrigen $f_T$-Frequenzen) der magnetostatische Einfluß deutlich; die Selbstinduktivität der Spule nimmt deshalb bei Annäherung des Meßglieds 10 zu. Besteht ein Meßglied 10 dagegen aus nicht ferromagnetischen Materialien (beispielsweise Buntmetall), so wirkt nur der Wirbelstromeffekt, sofern die Oberflächen dieser Materialien elektrisch leitend sind. Die Selbstinduktivität der Spule nimmt also bei Annäherung ab. Da beim Anmeldungsgegenstand das Meßglied 10 aus den beiden unterschiedlich beschichteten Oberflächen besteht, ergibt sich der weiter oben beschriebene Effekt.

Beim Ausführungsbeispiel nach den Figuren 4 und 5 sind jeweils vier nicht weiter bezeichnete Spulen am Meßglied 10 als Sensoren vorhanden. Hierdurch verstärkt sich noch dieser Effekt.

Zusammengefaßt kann festgestellt werden, daß es mit Hilfe dieses Verfahrens möglich ist, Halbbrücken oder Vollbrücken auch dann mit aktiven Sensoren (Spulen) zu betreiben, wenn aus konstruktiven Gründen das Meßglied nur einseitig zugänglich ist. Dadurch erreicht man bei optimaler Parameterauslegung elektronischer Größen zueinander (insbesondere Trägerfrequenz, Spuleninduktivität bzw. der parallel zum Sensor anliegenden Kapazität) eine Erhöhung der Empfindlichkeit, bezogen auf eine aktive Spulen-Brücke. Gleichzeitig werden die eingangs genannten Fehler vermieden.

**Patentansprüche**

1. Meßvorrichtung zum Ermitteln von Abständen, Wegen, Drehzahlen, Positionen und dergleichen mit mindestens zwei als Spulen (11, 12) ausgebildeten Sensoren in Brückenschaltung, die auf derselben Seite des sich bewegenden Meßglieds (10) angeordnet sind, dessen Oberfläche in mindestens zwei Zonen (A, B) unterteilt ist, von denen die eine aus ferromagnetischem, die andere aus nicht ferromagnetischem, jedoch elektrisch leitfähigem Stoff besteht.

2. Meßvorrichtung nach Anspruch 1, bei der die Brücke als Halbbrücke mit zwei Spulen ausgebildet ist.

3. Vorrichtung nach Anspruch 1, bei der für die Brücke eine Vollbrücke verwendet wird und in jedem Brückenzweig eine Sensorspule angeordnet ist.

4. Verfahren zum Ermitteln von Abständen, Wegen, Drehzahlen, Positionen und dergleichen mit einer Meßvorrichtung nach Anspruch 1, bei dem die Meßbrücke mit einem Wechselstrom gespeist wird, dessen Frequenz so abgestimmt ist, daß der Meßweg von einem Brückenzweig (11) nach dem induktiven Prinzip, gleichzeitig vom anderen Brückenzweig (12) nach dem Wirbelstromprinzip erfaßt wird, oder umgekehrt.

**Claims**

1. Measuring device for detecting distances, paths, speeds, positions and the like, having at least two sensor, designed as coils (11, 12), in a bridge circuit, which coils are arranged on the same side as the moving measuring element (10), the surface of which is subdivided into at least two zones (A, B), of which one consists of ferromagnetic material, and the other of nonferromagnetic, but electrically conductive, material.

2. Measuring device according to Claim 1, wherein the bridge is designed as half-bridge with two coils.

3. Device according to Claim 1, wherein a full bridge is used for the bridge, and a sensor coil is arranged in each bridge arm.

4. Method for detecting distances, paths, speeds, positions and the like with a measuring device according to Claim 1, wherein the measuring bridge is fed with an alternating current, the frequency of which is tuned so that the measuring path from one bridge arm (11) is detected in accordance with the inductive principle, and at the same time the measuring path from the other bridge arm (12) is detected according to the eddy-current principle, or vice versa.

**Revendications**

1. Dispositif de mesure pour la détermination d'intervalles, de trajectoires, de vitesses de rotation, de positions ou analogues comportant au moins deux détecteurs sous forme de bobines (11, 12) montés en pont qui sont placés sur le même côté de l'organe de mesure mobile (10) dont la surface est partagée

en au moins deux zones (A) et (B) dont l'une est constituée d'une matière ferromagnétique et l'autre d'une matière non ferromagnétique, chacune étant conductrice de l'électricité.

2. Dispositif de mesure selon la revendication 1, selon lequel le pont est constitué d'un demipont avec deux bobines.

3. Dispositif selon la revendication 1, selon lequel on utilise un pont complet comme pont et sur chaque branche de pont est placée une bobine de détection.

4. Procédé pour la détermination d'intervalles, de trajectoires de vitesse de rotation, de positions ou analogues comportant un dispositif de mesure selon la revendication 1, selon lequel le pont de mesure est alimenté avec un courant alternatif dont la fréquence est réglée de telle sorte que la trajectoire de mesure est déterminée sur une des branches du pont (11) selon le principe de l'induction et simultanément sur l'autre branche (12) selon le principe des courants de Foucault.

FIG. 1

FIG.2

FIG.3

FIG. 4

FIG. 5